(19) Europäisches Patentamt
European Patent Office
Office européen des brevets

(11) EP 4 112 330 B1

(12) EUROPEAN PATENT SPECIFICATION

(45) Date of publication and mention of the grant of the patent:
**31.01.2024 Bulletin 2024/05**

(21) Application number: **22173523.6**

(22) Date of filing: **16.05.2022**

(51) International Patent Classification (IPC):
***B60C 1/00*** *(2006.01)* ***C08L 7/00*** *(2006.01)*
*B60C 11/00* *(2006.01)*

(52) Cooperative Patent Classification (CPC):
(C-Sets available)
**B60C 1/0016; B60C 11/0008; C08L 7/00;**
B60C 11/005; B60C 2011/0025; B60C 2011/0033;
Y02T 10/86 (Cont.)

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2021 JP 2021108400**

(43) Date of publication of application:
**04.01.2023 Bulletin 2023/01**

(73) Proprietor: **Sumitomo Rubber Industries, Ltd.**
**Kobe-shi, Hyogo-ken 651-0072 (JP)**

(72) Inventor: **TOMITA, Kota**
**Kobe-shi, Hyogo, 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**WO-A1-2018/216879**
**CN-A- 111 019 208**
**US-A1- 2008 066 840**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 7/00, C08L 9/00, C08L 9/00, C08L 25/16, C08L 91/00, C08L 19/003, C08L 91/06, C08K 3/04, C08K 3/36, C08K 5/548, C08K 3/22, C08K 3/24, C08K 5/20, C08K 5/18, C08K 5/3437, C08K 3/06, C08K 5/47, C08K 5/31;**
**C08L 7/00, C08L 9/00, C08L 9/00, C08L 47/00, C08L 91/00, C08L 19/003, C08L 91/06, C08K 3/04, C08K 3/36, C08K 5/548, C08K 3/22, C08K 3/24, C08K 5/20, C08K 5/18, C08K 5/3437, C08K 3/06, C08K 5/47, C08K 5/31;**
**C08L 7/00, C08L 9/00, C08L 9/00, C08L 57/02, C08L 91/00, C08L 19/003, C08L 91/06, C08K 3/04, C08K 3/36, C08K 5/548, C08K 3/22, C08K 3/24, C08K 5/20, C08K 5/18, C08K 5/3437, C08K 3/06, C08K 5/47, C08K 5/31**

## Description

BACKGROUND OF THE INVENTION

Field of the Invention

The present invention relates to a pneumatic tire, and more specifically relates to a pneumatic tire having excellent noise performance during high speed running.

Background Art

One of the factors that influence the stability of comfort in the interior of an automobile is the noise felt by occupants during running, and also for pneumatic tires (hereinafter, also simply referred to as "tires") mounted to an automobile, it has been conventionally proposed to reduce noise by various improvements such as improvements in the shape of a tread portion (for example, Japanese Laid-Open Patent Publication No. 2017-74845, Japanese Laid-Open Patent Publication No. 2018-199455, Japanese Laid-Open Patent Publication No. 2019-111838, Japanese Laid-Open Patent Publication No. 2020-82861).

However, in recent years, with the growing interest in environmental issues, the development and widespread use of automobiles that do not have an internal combustion engine, such as electric vehicles, are rapidly advancing. Unlike conventional automobiles, the drive system of these automobiles is motor drive. Therefore, as for the noise felt by occupants during running, the ratio of the noise caused by the internal combustion engine is decreased, but the ratio of the noise caused by tires is increased. This tendency becomes more remarkable as the speed increases, and the ratio of the noise caused by tires becomes particularly high during high speed running at a speed of 80 km/h or higher.

Under such circumstances, with the above-described conventional technology, the ratio of the noise caused by tires cannot be considered to be sufficiently reduced, and further improvement of the noise performance of tires is required.

Therefore, an object of the present invention is to provide a pneumatic tire having sufficient noise performance even during high speed running at a speed of 80 km/h or higher.

SUMMARY OF THE INVENTION

The present inventor has conducted an intensive study to solve the above problem, has found that the problem can be solved by the invention described below, and has completed the present invention.

A first aspect of the present invention is directed to a pneumatic tire including a tread portion, wherein

an outermost layer of the tread portion is formed by using a rubber composition, which contains vulcanized rubber powder and has a loss tangent (0°C tanδ) of greater than 0.30 as measured under conditions of 0°C, a frequency of 10 Hz, an initial strain of 5%, and a dynamic strain rate of 1% with deformation mode: tension, such that a thickness G (mm) at a crown portion of the outermost layer of the tread portion is greater than 5 mm,
an area ratio Sr (%) of the vulcanized rubber powder in a cross-section of the outermost layer of the tread portion is not less than 5% and not greater than 50%, and
a ratio (Sr/G) of the area ratio Sr (%) of the vulcanized rubber powder to the thickness G (mm) at the crown portion of the outermost layer of the tread portion is greater than 0.3.

In accordance with a second aspect of the present invention, in the pneumatic tire according to the first aspect, the 0°C tanδ is greater than 0.45.

In accordance with a third aspect of the present invention, in the pneumatic tire according to the second aspect, the 0°C tanδ is greater than 0.60.

In accordance with a fourth aspect of the present invention, in the pneumatic tire according to the first to third aspects,
the area ratio Sr (%) of the vulcanized rubber powder in the cross-section of the outermost layer of the tread portion is greater than 10% and less than 40%.

In accordance with a fifth aspect of the present invention, in the pneumatic tire according to the fourth aspect, the area ratio Sr (%) of the vulcanized rubber powder in the cross-section of the outermost layer of the tread portion is greater than 15% and less than 30%.

In accordance with a sixth aspect of the present invention, in the pneumatic tire according to the first to fifth aspects,
the ratio (Sr/G) of the area ratio Sr (%) of the vulcanized rubber powder to the thickness G (mm) at the crown portion of

the outermost layer of the tread portion is not less than 0.5.

In accordance with a seventh aspect of the present invention, in the pneumatic tire according to the sixth aspect, the ratio (Sr/G) of the area ratio Sr (%) of the vulcanized rubber powder to the thickness G (mm) at the crown portion of the outermost layer of the tread portion is not less than 0.8.

In accordance with an eighth aspect of the present invention, in the pneumatic tire according to any one of the first to seventh aspects,
both the rubber composition and the vulcanized rubber powder contain silica.

In accordance with a ninth aspect of the present invention, in the pneumatic tire according to the eighth aspect, a percentage by mass of the silica contained in the rubber composition is higher than that of the silica contained in the vulcanized rubber powder.

In accordance with a tenth aspect of the present invention, in the pneumatic tire according to any one of the first to ninth aspects,

the tread portion is composed of two or more rubber layers having different blending formulas, and
the rubber composition is used for a cap rubber layer which is the outermost layer.

In accordance with an eleventh aspect of the present invention, in the pneumatic tire according to the tenth aspect,
the rubber layer(s) other than the cap rubber layer contain the vulcanized rubber powder.

In accordance with a twelfth aspect of the present invention, in the pneumatic tire according to the eleventh aspect,

an area ratio Sout (%) of the vulcanized rubber powder in the cap rubber layer which is the outermost layer of the tread portion is higher than an area ratio Sin (%) of the vulcanized rubber powder in a base rubber layer which is an innermost layer of the tread portion, and
the area ratio Sin (%) of the vulcanized rubber powder in the base rubber layer is greater than 1%.

In accordance with a thirteenth aspect of the present invention, in the pneumatic tire according to any one of the first to twelfth aspects,
the vulcanized rubber powder is vulcanized rubber powder having a particle size finer than 30 mesh pass obtained through a test sieve specified in JIS Z8801-1.

In accordance with a fourteenth aspect of the present invention, in the pneumatic tire according to any one of the first to thirteenth aspects,
the pneumatic tire is a pneumatic tire which is mounted on a motor-driven automobile.

According to the present invention, it is possible to provide a pneumatic tire having sufficient noise performance even during high speed running at a speed of 80 km/h or higher.

DETAILED DESCRIPTION

[1] Characteristics of Tire According to Present Invention

First, the characteristics of the tire according to the present invention will be described.

1. Outline

The tire according to the present invention is a pneumatic tire including a tread portion, wherein an outermost layer of the tread portion is formed by using a rubber composition, which contains vulcanized rubber powder and has a loss tangent (0°C tanδ) of greater than 0.30 as measured under conditions of 0°C, a frequency of 10 Hz, an initial strain of 5%, and a dynamic strain rate of 1% with deformation mode: tension, such that a thickness G (mm) at a crown portion of the outermost layer of the tread portion is greater than 5 mm. An area ratio Sr (%) of the vulcanized rubber powder in a cross-section of the outermost layer of the tread portion is not less than 5% and not greater than 50%, and a ratio (Sr/G) of the area ratio Sr (%) of the vulcanized rubber powder to the thickness G (mm) at the crown portion of the outermost layer of the tread portion is greater than 0.3.

By having these characteristics, as described later, it is possible to provide a pneumatic tire having sufficient noise performance even during high speed running at a speed of 80 km/h or higher.

2. Mechanism for Exhibiting Advantageous Effects in Tire According to Present Invention

The mechanism for exhibiting advantageous effects in the tire according to the present invention is inferred as follows.

As described above, in the present invention, the rubber composition having a loss tangent (0°C tanδ) of greater than 0.30 as measured under conditions of 0°C, a frequency of 10 Hz, an initial strain of 5%, and a dynamic strain rate of 1% with deformation mode: tension is used for the outermost layer of the tread portion.

The loss tangent tanδ is a viscoelastic parameter indicating energy absorption performance, and the higher the value, the more energy can be absorbed and converted into heat. Specifically, by setting the 0°C tanδ so as to be greater than 0.30, this effect is sufficiently exhibited, and noise caused by the tire, that is, conversion of the energy (input energy) received by the tire to sound, is reduced even during high speed running, so that noise performance during high speed running can be improved.

The loss tangent (tanδ) can be measured, for example, by using a viscoelasticity measurement device such as "EPLEXOR (registered trademark)" manufactured by NETZSCH-Gerätebau GmbH. When the 0°C tanδ is greater than 0.45, the energy (input energy) received by the tire can be converted into heat at a higher ratio to reduce the generation of noise, so that such 0°C tanδ is preferable. The 0°C tanδ is more preferably greater than 0.60. The upper limit thereof is not particularly specified, but the 0°C tanδ is preferably less than 2.00.

In the tire, the outermost layer of the tread portion at which the tire comes into contact with the ground is formed from the rubber composition containing the vulcanized rubber powder. Since the vulcanized rubber powder functions as a cushioning material when contained in the rubber composition, by increasing the area ratio Sr of the vulcanized rubber powder in the cross-section, vibration transmitted from the tread portion can be absorbed to improve noise performance.

Specifically, since the thickness G (mm) at the crown portion of the outermost layer of the tread portion is greater than 2.5 mm, the area ratio Sr (%) of the vulcanized rubber powder in the cross-section is not less than 5% and not greater than 50%, and the ratio (Sr/G) of the area ratio Sr (%) to the thickness G (mm) is greater than 0.3, the effect as a cushioning material (silencing material, sound control material) is sufficiently exhibited, and the noise performance during high speed running can be improved.

In the above description, the thickness G (mm) at the crown portion of the outermost layer refers to the thickness of an outermost rubber layer on the equator plane in a cross-section in the radial direction of the tire, and refers to a thickness at a center in the width direction of an outermost layer portion forming a ground-contact surface closest to the equator plane.

In the present invention, the thickness G (mm) at the crown portion of the outermost layer is not particularly limited as long as it is greater than 2.5 mm, but the thickness G (mm) is preferably not less than 4 mm and more preferably not less than 6 mm. On the other hand, the upper limit thereof is not particularly limited, but the thickness G (mm) is preferably not greater than 15 mm, more preferably not greater than 13 mm, and more preferably not greater than 11 mm.

The above-described area ratio Sr of the vulcanized rubber powder in the cross-section can be obtained, for example, by imaging a sample obtained by cutting such that a surface parallel to a tread surface becomes an observation cross-section with a scanning electron microscope, obtaining the area of a domain occupied by the vulcanized rubber powder, and obtaining the ratio of this area to the area or the entire cross-section. The area ratio Sr is more preferably greater than 5%, further preferably greater than 8%, and particularly preferably greater than 15%. As the upper limit, the area ratio Sr is more preferably less than 50%, further preferably not greater than 45%, and particularly preferably not greater than 30%. In addition, the ratio Sr/G is more preferably not less than 0.5 and further preferably not less than 0.8. The upper limit of the ratio Sr/G is not particularly specified, but the ratio Sr/G is preferably not greater than 1.5.

In the present invention, these effects are synergistically exhibited, so that the noise performance can be sufficiently improved even during high speed running at a speed of 80 km/h or higher.

[2] More Preferable Mode of Tire According to Present Invention

The tire according to the present invention can achieve a greater effect by taking the following mode.

1. Containing Silica

In the tire according to the present invention, both the rubber composition and the vulcanized rubber powder preferably contain silica.

When the rubber composition and the vulcanized rubber powder contain silica, deformation easily occurs even in a minute deformation, so that it becomes easier to absorb an impact even in the vulcanized rubber powder, and the above-described 0°C tanδ can be further improved.

At this time, as for the degree of contribution to the improvement of 0°C tanδ, the degree of contribution of the

rubber composition is higher than that of the vulcanized rubber powder. Therefore, the percentage by mass of the silica contained in the rubber composition is preferably higher than that of the silica contained in the vulcanized rubber powder.

2. Making Tread Portion to Be Multilayered

In the present invention, the tread portion is not limited to a single-layer tread portion formed by using the above-described rubber composition, and may be composed of two or more rubber layers having different blending formulas. In this case, the above-described rubber composition is used for a cap rubber layer which is the outermost layer.

Rubber layers having different blending formulas generally have different loss tangents. Thus, in the case where rubber layers having different blending formulas are arranged to form a tread portion as described above, the phases of noise to which the respective rubber layers respond can be different. As a result, noise is more efficiently absorbed, so that the noise performance can be improved. When the rubber layer(s) other than the cap rubber layer also contain the vulcanized rubber powder, the above-described effect by the vulcanized rubber powder is synergistically exhibited. Therefore, it is more preferable that the rubber layer(s) other than the cap rubber layer also contain the vulcanized rubber powder.

However, in the case where the rubber composition contains the vulcanized rubber powder, the reinforcing properties may decrease, which may lead to a decrease in the durability of the tire. Therefore, preferably, an area ratio Sin (%) of the vulcanized rubber powder in an inner rubber layer is made lower than an area ratio Sout (%) of the vulcanized rubber powder in the cap rubber layer, that is, a relationship of Sout (%) > Sin (%) is satisfied. The area ratio Sin (%) is preferably greater than 1%.

Accordingly, durability can be ensured in the inner rubber layer, so that sufficient noise performance can be exhibited while maintaining sufficient durability. In order to sufficiently exert the function of the vulcanized rubber powder as a cushioning material, the area ratio Sin (%) of the vulcanized rubber powder in the inner rubber layer is preferably greater than 1%.

3. Particle Size of Vulcanized Rubber Powder

In the present invention, the vulcanized rubber powder preferably has a particle size finer than 30 mesh pass and coarser than 250 mesh pass obtained through a test sieve specified in JIS Z8801-1. By making the particle size finer than 30 mesh pass, it becomes easier to achieve uniform dispersion in the rubber composition, and it is possible to easily achieve sufficient durability in the rubber composition. On the other hand, by making the particle size coarser than 250 mesh pass, a domain of the vulcanized rubber powder can be formed in the rubber composition so as to have a sufficient size, so that it is considered that it becomes easier to cushion an impact, and it is possible to easily improve the noise performance.

[3] Embodiment

Hereinafter, the present invention will be specifically described based on an embodiment.

1. Rubber Composition

(1) Blending Materials

In the present invention, the rubber composition forming the outermost layer of the tread portion can be obtained from a rubber component and other blending materials described below.

(a) Rubber Component

In the present embodiment, the rubber component is not particularly limited, and rubbers (polymers) generally used in the production of tires, such as isoprene-based rubbers, diene-based rubbers such as butadiene rubber (BR), styrene-butadiene rubber (SBR), and nitrile rubber (NBR), and butyl-based rubbers such as isobutylene-isoprene-rubber, can be used. Among them, isoprene-based rubbers are preferable, and NR is preferably used since the cis structure of polyisoprene is close to 100% and the tensile strength is better than that of the other rubber components. In addition, from the viewpoint of forming micro domains in the rubber composition and making it easier to absorb noise by the domain structure thereof, NR and butadiene rubber, or NR and SBR are preferably used in combination, or three types of NR, BR, and SBR are preferably used in combination.

(I) Isoprene-Based Rubber

The amount (total amount) of the isoprene-based rubber in 100 parts by mass of the rubber component is preferably not less than 30 parts by mass, more preferably not less than 40 parts by mass, and further preferably not less than 45 parts by mass. On the other hand, as the upper limit, the amount (total amount) of the isoprene-based rubber is preferably not greater than 75 parts by mass, more preferably not greater than 70 parts by mass, and further preferably not greater than 60 parts by mass.

Examples of the isoprene-based rubber include natural rubber (NR), isoprene rubber (IR), reformed NR, modified NR, and modified IR, and NR is preferable since NR has excellent strength.

As the NR, for example, NRs that are generally used in the tire industry, such as SIR20, RSS#3, and TSR20, can be used. The IR is not particularly limited, and, as the IR, for example, IRs that are generally used in the tire industry, such as IR2200, can be used. Examples of the reformed NR include deproteinized natural rubber (DPNR) and ultra-pure natural rubber (UPNR), examples of the modified NR include epoxidized natural rubber (ENR), hydrogenated natural rubber (HNR), and grafted natural rubber, and examples of the modified IR include epoxidized isoprene rubber, hydrogenated isoprene rubber, and grafted isoprene rubber. These rubbers may be used individually, or two or more of these rubbers may be used in combination.

(II) BR

In the present embodiment, as the rubber component, BR is preferably used together with NR as necessary. Since these rubbers are incompatible with each other, it is considered that by mixing these rubbers, it is possible to form a micro domain structure and make it easier to mitigate an impact in the rubber layer together with the vulcanized rubber powder. The amount of the BR is not particularly limited, but is preferably not less than 5 parts by mass, more preferably not less than 20 parts by mass, and further preferably not less than 45 parts by mass. On the other hand, the upper limit thereof is also not particularly limited, but the amount of the BR is preferably not greater than 75 parts by mass, more preferably not greater than 70 parts by mass, and further preferably not greater than 60 parts by mass.

The weight-average molecular weight of the BR is, for example, greater than 100 thousand and less than 2 million. The vinyl bond content (1,2-bond butadiene unit content) of the BR is, for example, greater than 1% by mass and less than 30% by mass. The cis content of the BR is, for example, greater than 1% by mass and not greater than 98% by mass. The trans content of the BR is, for example, greater than 1% by mass and less than 60% by mass. The cis content can be measured by infrared absorption spectrometry.

The BR is not particularly limited, and a BR having a high cis content (a cis content of 90% or higher), a BR having a low cis content, a BR containing syndiotactic polybutadiene crystals, etc., can be used. The BR may be either an unmodified BR or a modified BR, and, for example, an S-modified BR modified with a compound (modifier) represented by the following formula can be used as the modified BR.

[Chem. 1]

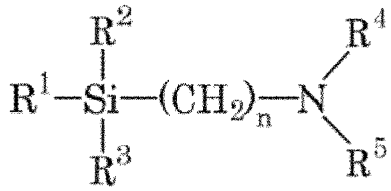

In the formula, $R^1$, $R^2$, and $R^3$ are the same or different from each other, and each represent an alkyl group, an alkoxy group, a silyloxy group, an acetal group, a carboxyl group (-COOH), a mercapto group (-SH), or a derivative thereof. $R^4$ and $R^5$ are the same or different from each other, and each represent a hydrogen atom or an alkyl group. $R^4$ and $R^5$ may be linked together to form a ring structure together with a nitrogen atom. "n" represents an integer.

An example of the modified BR modified with the compound (modifier) represented by the above formula is a BR obtained by modifying polymerization terminals (active terminals) with the compound represented by the above formula.

As $R^1$, $R^2$, and $R^3$, an alkoxy group is suitable (an alkoxy group preferably having 1 to 8 carbon atoms, more preferably 1 to 4 carbon atoms). As $R^4$ and $R^5$, an alkyl group (preferably, an alkyl group having 1 to 3 carbon atoms) is suitable. The integer "n" is preferably 1 to 5, more preferably 2 to 4, and further preferably 3. In addition, when $R^4$ and $R^5$ are linked together to form a ring structure together with the nitrogen atom, a four to eight-membered ring is preferably formed. Examples of the alkoxy group include cycloalkoxy groups (a cyclohexyloxy group, etc.) and aryloxy groups (a phenoxy group, a benzyloxy group, etc.).

Specific examples of the modifier include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These compounds may be used individually, or two or more of these compounds may be used in combination.

As the modified BR, a modified BR modified with the following compound (modifier) can also be used. Examples of the modifier include: polyglycidyl ethers of polyhydric alcohols, such as ethylene glycol diglycidyl ether, glycerin triglycidyl ether, trimethylolethane triglycidyl ether, and trimethylolpropane triglycidyl ether; polyglycidyl ethers of aromatic compounds having two or more phenol groups, such as diglycidylated bisphenol A; polyepoxy compounds such as 1,4-diglycidylbenzene, 1,3,5-triglycidylbenzene, and polyepoxylated liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxy aniline, diglycidyl orthotoluidine, tetraglycidyl meta-xylenediamine, tetraglycidylaminodiphenylmethane, tetraglycidyl-p-phenylenediamine, diglycidylaminomethylcyclohexane, and tetraglycidyl-1,3,-bisaminomethylcyclohexane; amino group-containing acid chlorides such as bis-(1-methylpropyl)carbamic acid chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis-(glycidyloxypropyl)-tetramethyldisiloxane and (3-glycidyloxypropyl)-pentamethyldisiloxane; sulfide group-containing silane compounds such as (trimethylsilyl)[3-(trimethoxysilyl)propyl]sulfide, (trimethylsilyl)[3-(triethoxysilyl)propyl]sulfide, (trimethylsilyl)[3-(tripropoxysilyl)propyl]sulfide, (trimethylsilyl)[3-(tributoxysilyl)propyl]sulfide, (trimethylsilyl)[3-(methyldimethoxysilyl)propyl] sulfide, (trimethylsilyl)[3-(methyldiethoxysilyl)propyl]sulfide, (trimethylsilyl)[3-(methyldipropoxysilyl)propyl] sulfide, and (trimethylsilyl)[3-(methyldibutoxysilyl)propyl]sulfide; N-substituted aziridine compounds such as ethyleneimine and propyleneimine; alkoxysilanes such as methyltriethoxysilane, N,N-bis(trimethylsilyl)-3-aminopropyltrimethoxysilane, N,N-bis(trimethylsilyl)-3-aminopropyltriethoxysilane, N,N-bis(trimethylsilyl)aminoethyltrimethoxysilane, and N,N-bis(trimethylsilyl)aminoethyltriethoxysilane; (thio)benzophenone compounds having an amino group and/or a substituted amino group, such as 4-N,N-dimethylaminobenzophenone, 4-N,N-dit-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis-(tetraethylamino)benzophenone; benzaldehyde compounds having an amino group and/or a substituted amino group, such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurolactam, N-vinyl-ω-laurolactam, N-methyl-β-propiolactam, and N-phenyl-β-propiolactam; and moreover, N,N-bis-(2,3-epoxypropoxy)-aniline, 4,4-methylene-bis-(N,N-glycidylaniline), tris-(2,3-epoxypropyl)-1,3,5-triazine-2,4,6-triones, N,N-diethylacetamide, N-methylmaleimide, N,N-diethyl urea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone. Modification with the above compounds (modifiers) can be carried out by a known method.

As the modified BR, for example, a tin-modified BR can also be used. As the tin-modified BR, a BR obtained by polymerizing 1,3-butadiene with a lithium initiator and then adding a tin compound to the polymerized 1,3-butadiene and in which the terminals of the modified BR molecules are bound to each other through tin-carbon bonds, is preferable.

Examples of the lithium initiator include lithium-based compounds such as alkyl lithiums, aryl lithiums, vinyl lithium, organotin lithium, and organic nitrogen lithium compounds, and lithium metal. A tin-modified BR with a high vinyl content and a low cis content can be manufactured using the lithium initiator as an initiator for the tin-modified BR.

Examples of the tin compound include tin tetrachloride, butyltin trichloride, dibutyltin dichloride, dioctyltin dichloride, tributyltin chloride, triphenyltin chloride, diphenyldibutyltin, triphenyltin ethoxide, diphenyldimethyltin, ditolyltin chloride, diphenyltin dioctanoate, divinyldiethyltin, tetrabenzyltin, dibutyltin distearate, tetraaryltin, and p-tributyltin styrene.

The content of tin atoms in the tin-modified BR is preferably not less than 50 ppm and more preferably not less than 60 ppm. On the other hand, the content of tin atoms is preferably not greater than 3000 ppm, more preferably not greater than 2500 ppm, and further preferably not greater than 250 ppm.

The molecular weight distribution (Mw/Mn) of the tin-modified BR is preferably not greater than 2 and more preferably not greater than 1.5.

The vinyl bond content of the tin-modified BR is preferably not less than 5% by mass and more preferably not less than 7% by mass. On the other hand, the vinyl bond content of the tin-modified BR is preferably not greater than 50% by mass and more preferably not greater than 20% by mass.

The above S-modified BRs or tin-modified BRs may be used individually, or two or more of the above S-modified BRs or tin-modified BRs may be used in combination.

As the BR, for example, products of Ube Industries, Ltd., JSR Corporation, Asahi Kasei Corporation, Zeon Corporation, etc., can be used.

(III) Other Rubber Component

As another rubber component, a rubber (polymer) generally used in the production of tires, such as styrene-butadiene rubber (SBR) and nitrile rubber (NBR), may be contained as necessary.

(b) Blending Materials Other Than Rubber Component

(I) Filler

In the present embodiment, the rubber composition preferably contains a filler. Specific examples of the filler include carbon black, silica, graphite, calcium carbonate, talc, alumina, clay, aluminum hydroxide, and mica. Among them, silica is preferably contained in combination with a silane coupling agent, and carbon black may be further contained as necessary.

(i) Silica

The rubber composition preferably contains silica. From the viewpoint of obtaining good durability, the BET specific surface area of the silica is preferably greater than 140 $m^2/g$ and more preferably greater than 160 $m^2/g$. On the other hand, from the viewpoint of obtaining good low-rolling resistance, the BET specific surface area of the silica is preferably less than 250 $m^2/g$ and more preferably less than 220 $m^2/g$. The above BET specific surface area is a value of $N_2SA$ measured by the BET method according to ASTM D3037-93.
The amount of the silica per 100 parts by mass of the rubber component is preferably not less than 40 parts by mass, more preferably not less than 50 parts by mass, and further preferably not less than 60 parts by mass. On the other hand, the amount of the silica is preferably not greater than 170 parts by mass, more preferably not greater than 130 parts by mass, and further preferably not greater than 80 parts by mass.
Examples of the silica include dry-process silica (anhydrous silica) and wet-process silica (hydrous silica). Between them, wet-process silica is preferable for the reason that it has a higher silanol group content. In addition to the above-described silica using hydrous glass or the like as a raw material, silica using a biomass material such as rice husks as a raw material may be used.
As the silica, for example, products of Evonik Industries Ag, Rhodia, Tosoh Silica Corporation, Solvay Japan, Ltd., Tokuyama Corporation, etc., can be used.

(ii) Silane Coupling Agent

When using silica, a silane coupling agent is preferably used together. The silane coupling agent is not particularly limited, and examples of the silane coupling agent include: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z manufactured by Momentive Performance Materials, Inc.; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These silane coupling agents may be used individually, or two or more of these silane coupling agents may be used in combination.
As the silane coupling agent, for example, products of Evonik Industries Ag, Momentive Performance Materials, Inc., Shin-Etsu Silicones, Tokyo Chemical Industry Co., Ltd., AZmax.co, Dow Corning Toray Co., Ltd., etc., can be used.
The amount of the silane coupling agent per 100 parts by mass of the silica is, for example, greater than 3 parts by mass and less than 15 parts by mass.

(iii) Carbon Black

The rubber composition preferably contains carbon black as necessary. The amount of the carbon black per 100 parts by mass of the rubber component is, for example, preferably not less than 1 part by mass, more preferably

not less than 3 parts by mass, and further preferably not less than 5 parts by mass. On the other hand, the amount of the carbon black is preferably not greater than 20 parts by mass, more preferably not greater than 15 parts by mass, and further preferably not greater than 10 parts by mass.

The carbon black is not particularly limited, and examples of the carbon black include: furnace black (furnace carbon black) such as SAF, ISAF, HAF, MAP, FEF, SRF, GPF, APF, FF, CF, SCF, and ECF; acetylene black (acetylene carbon black); thermal black (thermal carbon black) such as FT and MT; and channel black (channel carbon black) such as EPC, MPC, and CC. These carbon blacks may be used individually, or two or more of these carbon blacks may be used in combination.

The nitrogen adsorption specific surface area ($N_2SA$) of the carbon black is, for example, greater than 30 $m^2/g$ and less than 250 $m^2/g$. The dibutyl phthalate (DBP) absorption amount of the carbon black is, for example, greater than 50 ml/100 g and less than 250 ml/100 g. The nitrogen adsorption specific surface area of the carbon black is measured according to ASTM D4820-93, and the DBP absorption amount of the carbon black is measured according to ASTM D2414-93.

The carbon black is not particularly limited, and specific examples of the carbon black include N134, N110, N220, N234, N219, N339, N330, N326, N351, N550, and N762. As commercially available products, products of Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon Co., etc., can be used. These carbon blacks may be used individually, or two or more of these carbon blacks may be used in combination.

(iv) Other Filler

In addition to the above-described silica and carbon black, the rubber composition may contain fillers generally used in the tire industry, such as graphite, calcium carbonate, talc, alumina, clay, aluminum hydroxide, and mica. The amount of each of these fillers per 100 parts by mass of the rubber component is, for example, greater than 0.1 parts by mass and less than 200 parts by mass.

(II) Vulcanized rubber powder

As described above, the rubber composition contains vulcanized rubber powder produced by crushing vulcanized rubber, as a material that functions as a cushioning material. As the vulcanized rubber powder, commercially available vulcanized rubber powder obtained by crushing used tires with a roll machine, a grinder, or the like and then sieving the crushed matter to a predetermined particle diameter may be used, but vulcanized rubber powder obtained by vulcanizing, crushing, and sieving a separately formulated rubber composition may be used as necessary. As described above, the particle size of the vulcanized rubber powder is preferably a particle size finer than 30 mesh pass and coarser than 250 mesh pass obtained through a test sieve specified in JIS Z8801-1.

As described above, containing the vulcanized rubber powder may decrease the reinforcing properties of the tire, which may lead to a decrease in the durability of the tire. Therefore, the amount of the vulcanized rubber powder per 100 parts by mass of the rubber component is, for example, preferably not less than 10 parts by mass and not greater than 100 parts by mass, more preferably not less than 15 parts by mass and not greater than 70 parts by mass, and further preferably not less than 20 parts by mass and not greater than 40 parts by mass.

By setting the amount of the vulcanized rubber powder as described above, the area ratio Sr of the vulcanized rubber powder in the cross-section can be not less than 5% and not greater than 50% as described above. The area ratio Sr of the vulcanized rubber powder in the cross-section can be obtained, for example, by observing a sample cut out from the tread portion, using an SEM (scanning electron microscope) or the like.

(III) Plasticizer Component

In the rubber composition, a plasticizer component is preferably used as necessary. The amount of the plasticizer component per 100 parts by mass of the rubber component is preferably not less than 20 parts by mass, more preferably not less than 30 parts by mass, and further preferably not less than 45 parts by mass. Accordingly, it is easier to disperse the vulcanized rubber powder during mixing and obtain the effect as a cushioning material, and it also becomes easier for the entire rubber composition to move, so that it can be made easier to improve the noise performance. On the other hand, the upper limit of the amount of the plasticizer component is not particularly limited, but the amount of the plasticizer component is preferably not greater than 100 parts by mass, more preferably not greater than 70 parts by mass, and further preferably not greater than 60 parts by mass. Accordingly, when mixing the rubber, it is less likely to cause a decrease in viscosity, so that it can be made easier to disperse the vulcanized rubber powder. Here, the plasticizer component refers to a component that plasticizes the rubber composition, such as process oil, extender oil of the rubber component, liquid rubber, and a resin component.

(IV) Resin Component

From the viewpoint of processability (imparting adhesiveness), the rubber composition preferably contains a resin component as necessary. The resin component may be solid or liquid at room temperature. Specific examples of the resin component include rosin-based resins, styrene-based resins, coumarone-based resins, terpene-based resins, C5 resins, C9 resins, C5C9 resins, and acrylic-based resins, and two or more of these resins may be used in combination. The amount of the resin component per 100 parts by mass of the rubber component is preferably not less than 15 parts by mass, more preferably not less than 25 parts by mass, and further preferably not less than 30 parts by mass. On the other hand, the amount of the resin component is preferably not greater than 60 parts by mass, more preferably not greater than 55 parts by mass, and further preferably not greater than 50 parts by mass.

The rosin-based resins refer to resins that are obtained by processing pinene resin and contain rosin acid as a main component. The rosin-based resins (rosins) can be classified depending on whether the rosins are modified or not, that is, can be classified into non-modified rosins (unmodified rosins) and modified rosin products (rosin derivatives). Examples of non-modified rosins include tall rosin (also called tall oil rosin), gum rosin, wood rosin, disproportionated rosins, polymerized rosins, hydrogenated rosins, and other chemically altered rosins. Modified rosins are obtained by modifying non-modified rosins, and examples of modified rosin products include rosin esters, unsaturated carboxylic acid-modified rosins, unsaturated carboxylic acid-modified rosin esters, amide compounds of rosins, and amine salts of rosins.

The styrene-based resins are each a polymer for which a styrene-based monomer is used as a constituent monomer, and examples of the styrene-based resins include a polymer obtained by polymerization with a styrene-based monomer as a main component (not less than 50% by mass). Specific examples of the styrene-based resins include homopolymers obtained by individually polymerizing styrene-based monomers (styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene, etc.), copolymers each obtained by copolymerizing two or more styrene-based monomers, and copolymers of styrene-based monomers and other monomers that can be copolymerized with styrene-based monomers.

Examples of the other monomers include: acrylonitriles such as acrylonitrile and methacrylonitrile; acrylics; unsaturated carboxylic acids such as methacrylic acid; unsaturated carboxylic acid esters such as methyl acrylate and methyl methacrylate; dienes such as chloroprene and butadiene isoprene; olefins such as 1-butene and 1-pentene; and α, β-unsaturated carboxylic acids or acid anhydrides thereof such as maleic anhydride.

Among the coumarone-based resins, coumarone-indene resins are preferable. The coumarone-indene resins are each a resin containing coumarone and indene as monomer components that form the skeleton (main chain) of the resin. Examples of the monomer components contained in the skeleton other than coumarone and indene include styrene, α-methylstyrene, methylindene, and vinyltoluene.

The amount of the coumarone-indene resin per 100 parts by mass of the rubber component is, for example, greater than 1.0 part by mass and less than 50.0 parts by mass.

The hydroxyl value (OH value) of the coumarone-indene resin is, for example, greater than 15 mg KOH/g and less than 150 mg KOH/g. The OH value is represented, in milligrams, as an amount of potassium hydroxide that is required to neutralize acetic acid bound to hydroxyl groups when 1 g of the resin is acetylated, and is a value measured by potentiometric titration (JIS K0070: 1992).

The softening point of the coumarone-indene resin is, for example, higher than 30°C and lower than 160°C. The softening point is a softening point that is measured with a ring and ball softening point measuring device according to JIS K6220-1: 2001 and that is a temperature at which a ball has descended.

Examples of the terpene-based resins include polyterpenes, terpene phenols, and aromatic modified terpene resins. The polyterpenes are resins obtained by polymerizing terpene compounds, and hydrogenated products thereof. The above terpene compounds are hydrocarbons represented by a composition of (CsHs)n and oxygenated derivatives thereof, and are compounds having, as a basic backbone, a terpene classified into monoterpene ($C_{10}H_{16}$), sesquiterpene ($C_{15}H_{24}$), diterpene ($C_{20}H_{32}$), and the like. Examples of the terpene compounds include α-pinene, β-pinene, dipentene, limonene, myrcene, allo-ocimene, ocimene, α-phellandrene, α-terpinene, γ-terpinene, terpinolene, 1,8-cineole, 1,4-cineole, α-terpineol, β-terpineol, and γ-terpineol.

Examples of the polyterpenes include terpene resins formed from the above-described terpene compounds such as α-pinene resin, β-pinene resin, limonene resin, dipentene resin, and β-pinene-limonene resin, and hydrogenated terpene resins obtained by hydrogenating the terpene resins. Examples of the terpene phenols include resins obtained by copolymerization of the above terpene compound and a phenolic compound, and resins obtained by hydrogenating the resins, and specific examples of the terpene phenols include resins obtained by condensation of the above terpene compound, a phenolic compound, and formalin. Examples of the phenolic compounds include phenol, bisphenol A, cresol, and xylenol. Examples of the aromatic modified terpene resins include resins obtained by modifying a terpene resin with an aromatic compound, and resins obtained by hydrogenating the resins. Here, the aromatic compound is

not particularly limited as long as the aromatic compound is a compound having an aromatic ring. Examples of the aromatic compound include: phenolic compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene derivatives such as styrene, alkylstyrenes, alkoxystyrenes, and unsaturated hydrocarbon group-containing styrenes; coumarone; and indene.

The "C5 resins" refer to resins obtained by polymerizing a C5 fraction. Examples of the C5 fraction include petroleum fractions having 4 to 5 carbon atoms such as cyclopentadiene, pentene, pentadiene, and isoprene. As the C5 resins, dicyclopentadiene resins (DCPD resins) are suitably used.

The "C9 resins" refer to resins obtained by polymerizing a C9 fraction, and may be hydrogenated or modified products of the resins. Examples of the C9 fraction include petroleum fractions having 8 to 10 carbon atoms such as vinyltoluene, alkylstyrene, indene, and methylindene. As specific examples of the C9 resins, coumarone-indene resins, coumarone resins, indene resins, and aromatic vinyl-based resins are suitably used. As the aromatic vinyl-based resin, a homopolymer of α-methylstyrene (AMS resin) or styrene or a copolymer of α-methylstyrene and styrene is preferable, and a copolymer of α-methylstyrene and styrene is more preferable, for the reason that the polymer is economic, is easily processed, and has excellent heat generation properties. As the aromatic vinyl-based resins, for example, products commercially available from Kraton Corporation, Eastman Chemical Company, etc., can be used.

The "C5C9 resins" refer to resins obtained by copolymerizing the C5 fraction and the C9 fraction, and may be hydrogenated or modified products of the resins. Examples of the C5 fraction and the C9 fraction include the above-described petroleum fractions. As the C5C9 resins, for example, products commercially available from Tosoh Corporation, Zibo Luhua Hongjin New Material Co., Ltd., etc., can be used.

The acrylic-based resins are not particularly limited, but, for example, a non-solvent type acrylic-based resin can be used.

An example of the non-solvent type acrylic-based resin is a (meth)acrylic-based resin (polymer) synthesized by a high-temperature continuous polymerization method (high-temperature continuous bulk polymerization method) (the methods disclosed in US Patent No. 4,414,370, Japanese Laid-Open Patent Publication No. S59-6207, Japanese Examined Patent Publication No. H5-58005, Japanese Laid-Open Patent Publication No. H1-313522, US Patent No. 5,010,166, annual research report of Toagosei Co., Ltd., TREND 2000, No. 3, pages 42-45, etc.) by avoiding use of a polymerization initiator, a chain transfer agent, an organic solvent, etc., which are sub-materials, as much as possible. In the present invention, (meth)acrylic means methacrylic and acrylic.

Examples of the monomer component that forms the acrylic-based resin include (meth)acrylic acids, (meth)acrylic acid esters (alkyl esters, aryl esters, aralkyl esters, etc.), (meth)acrylamide, and (meth)acrylic acid derivatives such as (meth)acrylamide derivatives.

Moreover, as the monomer component that forms the acrylic-based resin, an aromatic vinyl such as styrene, α-methylstyrene, vinyltoluene, vinylnaphthalene, divinylbenzene, trivinylbenzene, and divinylnaphthalene may be used together with (meth)acrylic acid or a (meth)acrylic acid derivative.

The acrylic-based resin may be a resin composed of only a (meth)acrylic component, or may be a resin also containing a component other than the (meth)acrylic component. In addition, the acrylic-based resin may have a hydroxyl group, a carboxyl group, a silanol group, or the like.

As the resin component, for example, products of Maruzen Petrochemical Co., Ltd., Sumitomo Bakelite Co., Ltd., Yasuhara Chemical Co., Ltd., Tosoh Corporation, Rutgers Chemicals AG, BASF, Arizona Chemical Company, NITTO CHEMICAL CO., LTD., NIPPON SHOKUBAI CO., LTD., JXTG Nippon Oil & Energy Corporation, Arakawa Chemical Industries, Ltd., Taoka Chemical Co., Ltd., etc., can be used.

(V) Vulcanization Activator

The rubber composition preferably contains a vulcanization activator as necessary. Accordingly, a strong active action is exerted on a crosslinking reaction, and the vulcanization rate is increased, so that the crosslink density and the reversion resistance can be increased. As a specific vulcanization activator, for example, Activator 73A (zinc soap mixture of aliphatic and aromatic carboxylic acids) manufactured by Struktol Company of America, etc., can be used. The amount of the vulcanization activator per 100 parts by mass of the rubber component is preferably not less than 0.1 parts by mass and not greater than 3 parts by mass, more preferably not less than 0.2 parts by mass and not greater than 2.5 parts by mass, and further preferably not less than 0.3 parts by mass and not greater than 2 parts by mass.

(VI) Antioxidant

The rubber composition preferably contains an antioxidant. The amount of the antioxidant per 100 parts by mass of the rubber component is, for example, greater than 1 part by mass and less than 10 parts by mass.

Examples of the antioxidant include: naphthylamine-based antioxidants such as phenyl-α-naphthylamine;

diphenylamine-based antioxidants such as octylated diphenylamine and 4,4'-bis($\alpha$,$\alpha$'-dimethylbenzyl)diphenylamine; p-phenylenediamine-based antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based antioxidants such as a polymer of 2,2,4-trimethyl-1,2-dihydroquinoline; monophenol-based antioxidants such as 2,6-di-t-butyl-4-methylphenol and styrenated phenol; and bis-, tris-, and poly-phenol-based antioxidants such as tetrakis-[methylene-3-(3',5'-di-t-butyl-4'-hydroxyphenyl)propionate]methane. These antioxidants may be used individually, or two or more of these antioxidants may be used in combination.

As the antioxidant, for example, products of Seiko Chemical Co., Ltd., SUMITOMO CHEMICAL COMPANY, LIMITED, Ouchi Shinko Chemical Industrial Co., Ltd., Flexsys, etc., can be used.

(VII) Lubricant

The rubber composition may contain a lubricant. As the lubricant, a lubricant based on a fatty acid derivative such as stearic acid is preferable, and specifically, as stearic acid, for example, products of NOF Corporation, Kao Corporation, FUJIFILM Wako Pure Chemical Industries, Ltd., New Japan Chemical Co., Ltd., etc., can be used, and Struktol WB16 manufactured by Struktol Company of America, etc., can also be used. The amount of the lubricant per 100 parts by mass of the rubber component is preferably not less than 0.1 parts by mass and not greater than 3 parts by mass, more preferably not less than 0.5 parts by mass and not greater than 2.5 parts by mass, and further preferably not less than 1.0 part by mass and not greater than 2.0 parts by mass.

(VIII) Zinc Oxide

The rubber composition may contain zinc oxide. The amount of the zinc oxide per 100 parts by mass of the rubber component is, for example, greater than 0.5 parts by mass and less than 15 parts by mass. As the zinc oxide, a conventionally known one can be used, and, for example, products of Mitsui Mining & Smelting Co., Ltd., Toho Zinc Co., Ltd., HakusuiTech Co., Ltd., SEIDO CHEMICAL INDUSTRY CO., LTD., Sakai Chemical Industry Co., Ltd., etc., can be used.

(IX) Wax

The rubber composition preferably contains a wax. The amount of the wax per 100 parts by mass of the rubber component is, for example, 0.5 to 20 parts by mass, preferably 1.0 to 15 parts by mass, and more preferably 1.5 to 10 parts by mass.

The wax is not particularly limited, and examples of the wax include: petroleum waxes such as paraffin wax and microcrystalline wax; natural waxes such as vegetable wax and animal wax; and synthesized waxes such as polymers of ethylene, propylene, and the like. These waxes may be used individually, or two or more of these waxes may be used in combination.

As the wax, for example, products of Ouchi Shinko Chemical Industrial Co., Ltd., NIPPON SEIRO CO., LTD., Seiko Chemical Co., Ltd., etc., can be used.

(X) Crosslinking Agent and Vulcanization Accelerator

The rubber composition preferably contains a crosslinking agent such as sulfur. The amount of the crosslinking agent per 100 parts by mass of the rubber component is, for example, greater than 0.1 parts by mass and less than 10.0 parts by mass.

Examples of the sulfur include powdery sulfur, precipitated sulfur, colloidal sulfur, insoluble sulfur, highly dispersible sulfur, and soluble sulfur, which are generally used in the rubber industry. These sulfurs may be used individually, or two or more of these sulfurs may be used in combination.

As the sulfur, for example, products of Tsurumi Chemical Industry Co., Ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used.

The rubber composition preferably contains a vulcanization accelerator. The amount of the vulcanization accelerator per 100 parts by mass of the rubber component is, for example, greater than 0.3 parts by mass and less than 10.0 parts by mass.

Examples of the vulcanization accelerator include: thiazole-based vulcanization accelerators such as 2-mercaptobenzothiazole, di-2-benzothiazolyl disulfide, and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis (2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. These vulcanization accelerators may be used individually, or two or more of these vulcanization accelerators may be used in combination.

(XI) Others

In addition to the above-described components, additives generally used in the tire industry, such as fatty acid metal salts, carboxylic acid metal salts, and organic peroxides, may be further blended in the rubber composition. The amount of each of these additives per 100 parts by mass of the rubber component is, for example, greater than 0.1 parts by mass and less than 200 parts by mass.

(2) Production of Rubber Composition

Each rubber composition described above is produced by a general method; for example, a production method including a base kneading step of kneading a rubber component and a filler such as silica and a finish kneading step of kneading a crosslinking agent and a kneaded product obtained in the base kneading step.

The kneading can be performed by using, for example, a known (sealed type) kneading machine such as a Banbury mixer, a kneader, and an open roll.

In the base kneading step, the kneading temperature is, for example, higher than 50°C and lower than 200°C, and the kneading time is, for example, longer than 30 seconds and shorter than 30 minutes. In the base kneading step, in addition to the above components, ingredients that are conventionally used in the rubber industry, for example, a softener such as oil, stearic acid, zinc oxide, an antioxidant, a wax, a vulcanization accelerator, etc., may be added and kneaded as necessary.

In the finish kneading step, the crosslinking agent and the kneaded product obtained in the base kneading step are kneaded. In the finish kneading step, the kneading temperature is, for example, higher than room temperature and lower than 80°C, and the kneading time is, for example, longer than 1 minute and shorter than 15 minutes. In the finish kneading step, in addition to the above components, a vulcanization accelerator, zinc oxide, etc., may be added and kneaded as necessary.

2. Production of Tire

The tire of the present invention can be produced as an unvulcanized tire through shaping on a tire shaping machine by a normal method.

Specifically, an unvulcanized tire is produced by winding, on a shaping drum, an inner liner as a member for ensuring the airtightness of the tire, a carcass as a member for withstanding the load, impact, and filling air pressure received by the tire, a belt member as a member for strongly tightening the carcass to increase the stiffness of a tread, etc., placing bead portions as members for fixing both ends of the carcass to both side edge portions and fixing the tire to a rim, shaping these members into a toroid shape, then attaching a tread to a center portion of the outer periphery, and attaching sidewalls on the radially outer side to form side portions.

Thereafter, a tire is obtained by heating and pressurizing the produced unvulcanized tire in a vulcanizing machine. The vulcanization step can be carried out by applying known vulcanization means. The vulcanization temperature is, for example, higher than 120°C and lower than 200°C, and the vulcanization time is, for example, longer than 5 minutes and shorter than 15 minutes.

As described above, the tire according to the present embodiment is a pneumatic tire having sufficient noise performance even during high speed running at a speed of 80 km/h or higher, so that when the tire is mounted on a motor-driven automobile that does not have an internal combustion engine, a particularly remarkable effect can be exhibited, and thus such a case is preferable.

EXAMPLES

Hereinafter, the present invention will be further specifically described by means of examples. In the following, a tread portion having a two-layer structure with a first rubber composition as a cap rubber layer and a second rubber composition as a base rubber layer was produced, and a tire having a size of 205/55R16 was manufactured.

1. Production of Rubber Compositions

Prior to production of a tire, a rubber composition for forming a tread portion was produced.

(1) Blending Materials

First, each blending material described below was prepared.

(a) Rubber Component

(I) NR: TSR20
(II-1) BR-1: UBEPOL BR150B manufactured by Ube Industries, Ltd.
(II-2) BR-2: N103 manufactured by Asahi Kasei Chemicals Corporation
(III) SBR: SBR1502 manufactured by JSR Corporation (emulsion-polymerized SBR)

(b) Blending Materials Other Than Rubber Component

(I) Carbon black: DIABLACK N220 manufactured by Mitsubishi Chemical Corporation
(II) Silica: ULTRASII, VN3 manufactured by Evonik Industries Ag
(III) Silane coupling agent: Si266 manufactured by Evonik Industries Ag (bis(3-triethoxysilylpropyl)disulfide)
(IV) Wax: OZOACE 0355 manufactured by NIPPON SEIRO CO., LTD.
(V) Zinc oxide: Zinc Oxide Type-1 manufactured by Mitsui Mining & Smelting Co., Ltd.
(VI-1) Vulcanized rubber powder-1: vulcanized rubber powder having a silica content of 40 wt% (see the next paragraph for the production method)
(VL2) Vulcanized rubber powder-2: vulcanized rubber powder having a silica content of 10 wt% (see the next paragraph for the production method)
(VII) Vulcanization activator: Activator 73A manufactured by Struktol Company of America (zinc soap mixture of aliphatic and aromatic carboxylic acids)
(VIII) Lubricant: Struktol WB16 manufactured by Struktol Company of America
(IV) Stearic acid: stearic acid "Camellia" manufactured by NOF Corporation
(X-1) Antioxidant-1: NOCRAC 6C manufactured by Ouchi Shinko Chemical Industrial Co., Ltd. (N-phenyl-N'-(1,3-dimethylbutyl)-p-phenylenediamine)
(X-2) Antioxidant-2: ANTAGE RD manufactured by Kawaguchi Chemical Industry Co., Ltd.
(2,2,4-trimethyl-1,2-dihydroquinoline)
(XI) Oil: VIVATEC NC500 manufactured by H&R (aromatic process oil)
(XII-1) Resin-1: SYLVARES SA85 manufactured by Arizona Chemical Company
(AMS resin: copolymer of $\alpha$-methylstyrene and styrene)
(XII-2) Resin-2: T-REZ OP501 manufactured by JXTG Nippon Oil & Energy Corporation
(hydrogenated DCPD-based resin)
(XII-3) Resin-3: terpene styrene resin TO125 manufactured by Yasuhara Chemical Co., Ltd.
(aromatic modified terpene resin)
(XIII) Crosslinking agent and vulcanization accelerator

Sulfur: 5%-oil sulfur manufactured by Hosoi Chemical Industry Co., Ltd.
Vulcanization accelerator-1: NOCCELER CZ-G (CBS) manufactured by Ouchi Shinko Chemical Industrial Co., Ltd.
(N-cyclohexyl-2-benzothiazolyl sulfenamide)
Vulcanization accelerator-2: NOCCELER D (DPG) manufactured by Ouchi Shinko Chemical Industrial Co., Ltd.
(1,3-diphenylguanidine)

(c) Production of Vulcanized Rubber Powder

The above-described vulcanized rubber powder was produced according to the following procedure.
First, two kinds of kneaded products were obtained by kneading the materials other than the sulfur and the vulcanization accelerators under a condition of 150°C for 5 minutes by using a Banbury mixer in accordance with the two blending formulas shown in Table 1, then adding the sulfur and the vulcanization accelerators, and kneading the mixture under a condition of 80°C for 5 minutes by using an open roll. The unit of each blending amount is parts by mass.

Next, each of the obtained kneaded products was vulcanized under a condition of 170°C for 20 minutes to obtain rubber plates. Then, each of the obtained rubber plates was roll-crushed and sieved through a 30-mesh sieve, thereby obtaining two kinds of vulcanized rubber powder (vulcanized rubber powder-1 having a silica content of 40 wt%, vulcanized rubber powder-2 having a silica content of 10 wt%).

[Table 1]

| | Vulcanized rubber powder-1 | Vulcanized rubber powder-2 |
|---|---|---|
| SBR | 50 | 50 |
| NR | 30 | 30 |
| BR | 20 | 20 |
| Carbon black | 5 | 55 |
| Silica | 82 | 18 |
| Silane coupling agent | 8.2 | 1.8 |
| Zinc oxide | 2.4 | 2.4 |
| Stearic acid | 1.5 | 1.5 |
| Sulfur | 1.5 | 1.5 |
| Vulcanization accelerator-1 | 2 | 2 |
| Vulcanization accelerator-2 | 1 | 1 |

(2) Production of Rubber Composition

A kneaded product was obtained by kneading the materials other than the sulfur and the vulcanization accelerators under a condition of 150°C for 5 minutes by using a Banbury mixer in accordance with each of blending formulas shown in Tables 2 to 4. The unit of each blending amount is parts by mass.

Next, the sulfur and the vulcanization accelerators were added to the obtained kneaded product, and the mixture was kneaded under a condition of 80°C for 5 minutes by using an open roll, to obtain a rubber composition of each blending formula.

[Table 2]

| | Blending formula 1 | Blending formula 2 | Blending formula 3 | Blending formula 4 | Blending formula 5 | Blending formula 6 | Blending formula 7 | Blending formula 8 | Blending formula 9 | Blending formula 10 |
|---|---|---|---|---|---|---|---|---|---|---|
| NR | 50 | 50 | 50 | 50 | 50 | 50 | 50 | 50 | 50 | 50 |
| BR-1 | 25 | 25 | 25 | 25 | 25 | 25 | 25 | 25 | 25 | 25 |
| BR-2 | 25 | 25 | 25 | 25 | 25 | 25 | 25 | 25 | 25 | 25 |
| Carbon black | 5 | 5 | 5 | 5 | 5 | 5 | 5 | 5 | 5 | 5 |
| Silica | 60 | 60 | 60 | 60 | 60 | 60 | 60 | 60 | 60 | 60 |
| Silane coupling agent | 4.8 | 4.8 | 4.8 | 4.8 | 4.8 | 4.8 | 4.8 | 4.8 | 4.8 | 4.8 |
| Wax | 1.5 | 1.5 | 1.5 | 1.5 | 1.5 | 1.5 | 1.5 | 1.5 | 1.5 | 1.5 |
| Zinc oxide | 2 | 2 | 2 | 2 | 2 | 2 | 2 | 2 | 2 | 2 |
| Rubber powder-1 | | 2 | 6 | 4 | 2 | 10 | 11 | 5 | 8 | 9 |
| Rubber powder-2 | | | | | | | | | | |
| Vulcanization activator | 1.5 | 1.5 | 1.5 | 1.5 | 1.5 | 1.5 | 1.5 | 1.5 | 1.5 | 1.5 |
| Lubricant | 2 | 2 | 2 | 2 | 2 | 2 | 2 | 2 | 2 | 2 |
| Antioxidant-1 | 2 | 2 | 2 | 2 | 2 | 2 | 2 | 2 | 2 | 2 |
| Antioxidant-2 | 0.5 | 0.5 | 0.5 | 0.5 | 0.5 | 0.5 | 0.5 | 0.5 | 0.5 | 0.5 |
| Oil | 8 | 10 | 30 | 8 | 12 | 30 | 30 | 20 | 16 | 16 |
| Resin-1 | | 20 | | | | | | | | 5 |
| Resin-2 | 10 | | 1 | 10 | 10 | 5 | 15 | 23 | 25 | |
| Resin-3 | 11 | | 4 | 11 | 9 | 5 | 5 | 8 | 7 | 7 |
| Sulfur | 1 | 1 | 1 | 1 | 1 | 1 | 1 | 1 | 1 | 1 |
| Vulcanization accelerator-1 | 2 | 2 | 2 | 2 | 2 | 2 | 2 | 2 | 2 | 2 |
| Vulcanization accelerator-2 | 1.5 | 1.5 | 1.5 | 1.5 | 1.5 | 1.5 | 1.5 | 1.5 | 1.5 | 1.5 |

[Table 3]

| | Blending formula 11 | Blending formula 12 | Blending formula 13 | Blending formula 14 | Blending formula 15 | Blending formula 16 | Blending formula 17 | Blending formula 18 | Blending formula 19 | Blending formula 20 |
|---|---|---|---|---|---|---|---|---|---|---|
| NR | 50 | 50 | 50 | 50 | 50 | 50 | 50 | 50 | 50 | 50 |
| BR-1 | 25 | 25 | 25 | 25 | 25 | 25 | 25 | 25 | 25 | 25 |
| BR-2 | 25 | 25 | 25 | 25 | 25 | 25 | 25 | 25 | 25 | 25 |
| Carbon black | 5 | 5 | 5 | 5 | 5 | 5 | 5 | 5 | 5 | 5 |
| Silica | 60 | 60 | 60 | 60 | 60 | 60 | 60 | 60 | 60 | 60 |
| Silane coupling agent | 4.8 | 4.8 | 4.8 | 4.8 | 4.8 | 4.8 | 4.8 | 4.8 | 4.8 | 4.8 |
| Wax | 1.5 | 1.5 | 1.5 | 1.5 | 1.5 | 1.5 | 1.5 | 1.5 | 1.5 | 1.5 |
| Zinc oxide | 2 | 2 | 2 | 2 | 2 | 2 | 2 | 2 | 2 | 2 |
| Rubber powder-1 | 6 | 12 | 15 | 12 | 15 | 15 | 22 | | | |
| Rubber powder-2 | | | | | | | | 22 | 40 | 40 |
| Vulcanization activator | 1.5 | 1.5 | 1.5 | 1.5 | 1.5 | 1.5 | 1.5 | 1.5 | 1.5 | 1.5 |
| Lubricant | 2 | 2 | 2 | 2 | 2 | 2 | 2 | 2 | 2 | 2 |
| Antioxidant-1 | 2 | 2 | 2 | 2 | 2 | 2 | 2 | 2 | 2 | 2 |
| Antioxidant-2 | 0.5 | 0.5 | 0.5 | 0.5 | 0.5 | 0.5 | 0.5 | 0.5 | 0.5 | 0.5 |
| Oil | 30 | 20 | 16 | 16 | 16 | | | | | |
| Resin-1 | | 6 | | 5 | 5 | | | | | 10 |
| Resin-2 | 28 | | 15 | | | | | | | |
| Resin-3 | 5 | 8 | 17 | 27 | 27 | 50 | 50 | 50 | 50 | 50 |
| Sulfur | 1 | 1 | 1 | 1 | 1 | 1 | 1 | 1 | 1 | 1 |
| Vulcanization accelerator-1 | 2 | 2 | 2 | 2 | 2 | 2 | 2 | 2 | 2 | 2 |
| Vulcanization accelerator-2 | 1.5 | 1.5 | 1.5 | 1.5 | 1.5 | 1.5 | 1.5 | 1.5 | 1.5 | 1.5 |

[Table 4]

| | Blending formula 21 | Blending formula 22 |
|---|---|---|
| NR | 50 | 50 |
| BR 150B | 50 | 50 |
| CB N220 | 70 | 70 |
| Wax | 1.5 | 1.5 |
| Stearic acid | 2.0 | 2.0 |
| Zinc oxide | 2.0 | 2.0 |
| Vulcanized rubber powder-1 | | 2.2 |
| Antioxidant-1 | 1 | 1 |
| Antioxidant-2 | 1 | 1 |
| Oil | 15 | 15 |
| Sulfur | 2 | 2 |
| Vulcanization accelerator-1 | 1.2 | 1.2 |

2. Production of Tire

The rubber compositions of blending formula 1 to blending formula 20 shown in Table 2 and Table 3 and the rubber compositions of blending formula 21 and blending formula 22 shown in Table 4 were extruded as cap rubber layers and base rubber layers into predetermined shapes. Then, the obtained cap rubber layers and base rubber layers were combined as shown in Table 5 to Table 7 to produce tread portions having a two-layer structure, and the tread portions and the sidewall portions were attached together with other tire members to form unvulcanized tires, and the unvulcanized tires were press-vulcanized under a condition of 170°C for 10 minutes to produce test tires of Example 1 to Example 7 and Comparative Example 1 to Comparative Example 14.

3. Calculation of Parameters

Next, each of the following parameters was obtained for each of the obtained test tires.

(1) Area Ratio of Vulcanized Rubber Powder

First, an observation sample was cut out from each of the cap rubber layer and the base rubber layer of each test tire such that a surface parallel to the tread surface became an observation cross-section.

Next, the observation cross-section of the sample was imaged by using a scanning electron microscope (Teneo manufactured by Thermo Fisher) at an acceleration voltage of 15 kV to obtain an electron microscope image at a magnification of 50 times.

Next, the area of the domain corresponding to the rubber powder was calculated in a range of 2.54 mm × 1.69 mm of the obtained electron microscope image, and the ratio of the area of the domain to the area of the entire cross-section was calculated. This was performed in three visual fields per sample, and the average value of the calculated ratios was regarded as the area ratio of the vulcanized rubber powder.

The results are shown in Table 5 to Table 7. For the test tires for which the same blending formula was used, the same measurement was performed on each tire, and the obtained results were averaged again to obtain the area ratio of the vulcanized rubber powder for each blending formula.

(2) Loss Tangent

A rubber test piece for measurement was prepared by cutting out from the cap rubber layer of each test tire in a length of 20 mm × a width of 4 mm × a thickness of 2 mm such that the tire circumferential direction was the direction of the long side. For each rubber test piece, a loss tangent (0°C tanδ) was measured, using EPLEXOR series manufactured by NETZSCH-Gerätebau GmbH, under the conditions of 0°C, a frequency of 10 Hz, an initial strain of 5%, and a dynamic

strain rate of 1% with deformation mode: tension.

The results are shown in Table 5 to Table 7. For the test tires for which the same blending formula was used, the same measurement was performed on each tire, and the obtained results were averaged to obtain 0°C tanδ for each blending formula.

(3) Thickness at crown portion

The crown portion of the cap rubber layer of each test tire was cut, and the thickness of the cap rubber layer in the cut plane was measured using calipers. The results are shown in Table 5 to Table 7.

4. Performance Evaluation Test (Noise Performance Evaluation Test)

The respective test tires were mounted to all the wheels of vehicles (front wheel drive vehicles produced in Japan and having an engine displacement of 2000 cc), and filled with air such that the internal pressure of the front wheels was 230 kPa and the internal pressure of the rear wheels was 220 kPa. Then, each vehicle was caused to run at a speed of 100 km/h on a test course having a dry road surface, and the driver made a sensory inspection on a 5 point scale for the magnitude of the noise in the vehicle at that time.

In the evaluation, the scores by 20 drivers were summed up, and indexed with the total score in Comparative Example 12 as 100, and the reciprocal of the obtained index was evaluated. The results are shown in Table 5 to Table 7. A higher value indicates that the noise performance during high speed running is better.

$$\text{Noise performance} = [(\text{evaluation score of Comparative Example 12})/(\text{evaluation score of test tire})] \times 100$$

[Table 5]

| Example | | 1 | 2 | 3 | 4 | 5 | 6 | 7 |
|---|---|---|---|---|---|---|---|---|
| [Combination of tread portion] | | | | | | | | |
| Cap rubber layer | | Blending formula 15 | Blending formula 16 | Blending formula 17 | Blending formula 18 | Blending formula 18 | Blending formula 19 | Blending formula 20 |
| Base rubber layer | | Blending formula 21 | Blending formula 21 | Blending formula 21 | Blending formula 21 | Blending formula 22 | Blending formula 22 | Blending formula 22 |
| [Parameter] | | | | | | | | |
| Cap rubber layer | Silica content (wt%) in matrix | 24.3 | 24.1 | 23.5 | 23.5 | 23.5 | 21.9 | 21.1 |
| | Silica content (wt%) in vulcanized rubber powder | 40 | 40 | 40 | 40 | 10 | 10 | 10 |
| | Area ratio Sr (Sout) (%) of vulcanized rubber powder | 7 | 7 | 11 | 11 | 11 | 20 | 20 |
| | 0°C tanδ | 0.35 | 0.52 | 0.52 | 0.52 | 0.52 | 0.53 | 0.61 |
| | Thickness G (mm) at crown portion | 8 | 8 | 8 | 8 | 8 | 8 | 8 |
| | Sr/G | 0.875 | 0.875 | 1.375 | 1.375 | 1.375 | 2.5 | 2.5 |

(continued)

| | | | | | | | | |
|---|---|---|---|---|---|---|---|---|
| [Parameter] | | | | | | | | |
| Vulcanized rubber powder area ratio Sin (%) of base rubber layer | | - | - | - | - | 1.1 | 1.1 | 1.1 |
| Sout-Sin (%) | | - | - | - | - | 10 | 19 | 19 |
| [Evaluation] | | | | | | | | |
| Noise performance | | 108 | 112 | 114 | 116 | 120 | 124 | 128 |

[Table 6]

| Comparative Example | | 1 | 2 | 3 | 4 | 5 | 6 | 7 |
|---|---|---|---|---|---|---|---|---|
| [Combination of tread portion] | | | | | | | | |
| Cap rubber layer | | Blending formula 1 | Blending formula 2 | Blending formula 3 | Blending formula 4 | Blending formula 5 | Blending formula 6 | Blending formula 7 |
| Base rubber layer | | Blending formula 21 | Blending formula 21 | Blending formula 21 | Blending formula 21 | Blending formula 21 | Blending formula 21 | Blending formula 21 |
| [Parameter] | | | | | | | | |
| Cap rubber layer | Silica content (wt%) in matrix | 28.2 | 27.8 | 26.7 | 27.7 | 27.7 | 25.7 | 24.5 |
| | Silica content (wt%) in vulcanized rubber powder | - | 40 | 40 | 40 | 40 | 40 | 40 |
| | Area ratio Sr (Sout) (%) of vulcanized rubber powder | 0 | 1 | 3 | 2 | 1 | 5 | 6 |
| | 0°C tanδ | 0.28 | 0.27 | 0.25 | 0.27 | 0.31 | 0.26 | 0.28 |
| | Thickness G (mm) at crown portion | 2 | 2.5 | 2.5 | 10 | 4 | 2 | 24 |
| | Sr/G | 0 | 0.22 | 0.8 | 0.2 | 0.25 | 2.5 | 0.25 |
| Vulcanized rubber powder area ratio Sin (%) of base rubber layer | | - | - | - | - | - | - | - |
| Sout-Sin (%) | | - | - | - | - | - | - | - |
| [Evaluation] | | | | | | | | |
| Noise performance | | 90 | 92 | 94 | 94 | 92 | 96 | 96 |

[Table 7]

| Comparative Example | | 8 | 9 | 10 | 11 | 12 | 13 | 14 |
|---|---|---|---|---|---|---|---|---|
| [Combination of tread portion] | | | | | | | | |
| Cap rubber layer | | Blending formula 8 | Blending formula 9 | Blending formula 10 | Blending formula 11 | Blending formula 12 | Blending formula 13 | Blending formula 14 |
| Base rubber layer | | Blending formula 21 | Blending formula 21 | Blending formula 21 | Blending formula 21 | Blending formula 21 | Blending formula 21 | Blending formula 21 |
| [Parameter] | | | | | | | | |
| Cap rubber layer | Silica content (wt%) in matrix | 25.0 | 25.0 | 27.2 | 23.7 | 26.1 | 24.3 | 24.6 |
| | Silica content (wt%) in vulcanized rubber powder | 40 | 40 | 40 | 40 | 40 | 40 | 40 |
| | Area ratio Sr (Sout) (%) of vulcanized rubber powder | 3 | 4 | 4 | 3 | 6 | 8 | 5 |
| | 0°C tanδ | 0.32 | 0.32 | 0.25 | 0.33 | 0.28 | 0.33 | 0.35 |
| | Thickness G (mm) at crown portion | 15 | 4 | 8 | 6 | 15 | 4 | 20 |
| | Sr/G | 0.2 | 2 | 0.5 | 0.5 | 0.6 | 4 | 0.25 |
| Vulcanized rubber powder area ratio Sin (%) of base rubber layer | | - | - | - | - | - | - | - |
| Sout-Sin (%) | | - | - | - | - | - | - | - |
| [Evaluation] | | | | | | | | |
| Noise performance | | 94 | 94 | 96 | 98 | 100 | 98 | 98 |

From the results shown in Table 5 to Table 7, it is found that in the case where the outermost layer (cap rubber layer) of the tread portion is formed by using a rubber composition, which contains vulcanized rubber powder and has a loss tangent (0°C tanδ) of greater than 0.30 as measured under conditions of 0°C, a frequency of 10 Hz, an initial strain of 5%, and a dynamic strain rate of 1% with deformation mode: tension, such that a thickness G (mm) at a crown portion of the outermost layer of the tread portion is greater than 5 mm, an area ratio Sr (%) of the vulcanized rubber powder in a cross-section of the outermost layer of the tread portion is not less than 5% and not greater than 50%, and a ratio (Sr/G) of the area ratio Sr (%) of the vulcanized rubber powder to the thickness G (mm) at the crown portion of the outermost layer of the tread portion is greater than 0.3, it is possible to provide a pneumatic tire having sufficient noise performance even during high speed running at a speed of 80 km/h or higher.

## Claims

**1.** A pneumatic tire comprising a tread portion, wherein

an outermost layer of the tread portion is formed by using a rubber composition, which contains vulcanized rubber powder and has a loss tangent (0°C tanδ) of greater than 0.30 as measured under conditions of 0°C, a

frequency of 10 Hz, an initial strain of 5%, and a dynamic strain rate of 1% with deformation mode: tension, such that a thickness G (mm) at a crown portion of the outermost layer of the tread portion is greater than 5 mm, an area ratio Sr (%) of the vulcanized rubber powder in a cross-section of the outermost layer of the tread portion is not less than 5% and not greater than 50%, and
a ratio (Sr/G) of the area ratio Sr (%) of the vulcanized rubber powder to the thickness G (mm) at the crown portion of the outermost layer of the tread portion is greater than 0.3.

2. The pneumatic tire according to claim 1, wherein the 0°C tanδ is greater than 0.45.

3. The pneumatic tire according to claim 2, wherein the 0°C tanδ is greater than 0.60.

4. The pneumatic tire according to any one of claims 1 to 3, wherein the area ratio Sr (%) of the vulcanized rubber powder in the cross-section of the outermost layer of the tread portion is greater than 10% and less than 40%.

5. The pneumatic tire according to claim 4, wherein the area ratio Sr (%) of the vulcanized rubber powder in the cross-section of the outermost layer of the tread portion is greater than 15% and less than 30%.

6. The pneumatic tire according to any one of claims 1 to 5, wherein the ratio (Sr/G) of the area ratio Sr (%) of the vulcanized rubber powder to the thickness G (mm) at the crown portion of the outermost layer of the tread portion is not less than 0.5.

7. The pneumatic tire according to claim 6, wherein the ratio (Sr/G) of the area ratio Sr (%) of the vulcanized rubber powder to the thickness G (mm) at the crown portion of the outermost layer of the tread portion is not less than 0.8.

8. The pneumatic tire according to any one of claims 1 to 7, wherein both the rubber composition and the vulcanized rubber powder contain silica.

9. The pneumatic tire according to claim 8, wherein a percentage by mass of the silica contained in the rubber composition is higher than that of the silica contained in the vulcanized rubber powder.

10. The pneumatic tire according to any one of claims 1 to 9, wherein

the tread portion is composed of two or more rubber layers having different blending formulas, and
the rubber composition is used for a cap rubber layer which is the outermost layer.

11. The pneumatic tire according to claim 10, wherein the rubber layer(s) other than the cap rubber layer contain the vulcanized rubber powder.

12. The pneumatic tire according to claim 11, wherein

an area ratio Sout (%) of the vulcanized rubber powder in the cap rubber layer which is the outermost layer of the tread portion is higher than an area ratio Sin (%) of the vulcanized rubber powder in a base rubber layer which is an innermost layer of the tread portion, and
the area ratio Sin (%) of the vulcanized rubber powder in the base rubber layer is greater than 1%.

13. The pneumatic tire according to any one of claims 1 to 12, wherein the vulcanized rubber powder is vulcanized rubber powder having a particle size finer than 30 mesh pass obtained through a test sieve specified in JIS Z8801-1.

14. The pneumatic tire according to any one of claims 1 to 13, wherein the pneumatic tire is a pneumatic tire which is mounted on a motor-driven automobile.

## Patentansprüche

1. Luftreifen, der einen Laufflächenabschnitt umfasst, wobei

eine äußerste Schicht des Laufflächenabschnitts unter Verwendung einer Gummimischung gebildet ist, die vulkanisiertes Kautschukpulver enthält und einen Verlusttangens (0°C tanδ) von mehr als 0,30 aufweist, gemessen unter Bedingungen von 0°C, einer Frequenz von 10 Hz, einer anfänglichen Dehnung von 5% und einer dynamischen Dehnungsrate von 1% im Verformungsmodus: Spannung, so dass eine Dicke G (mm) an einem Kronenabschnitt der äußersten Schicht des Laufflächenabschnitts größer als 5 mm ist,
ein Flächenverhältnis Sr (%) des vulkanisierten Kautschukpulvers in einem Querschnitt der äußersten Schicht des Laufflächenabschnitts nicht kleiner als 5 % und nicht größer als 50 % ist und
ein Verhältnis (Sr/G) des Flächenverhältnisses Sr (%) des vulkanisierten Kautschukpulvers zu der Dicke G (mm) an dem Kronenabschnitt der äußersten Schicht des Laufflächenabschnitts größer als 0,3 ist.

**2.** Luftreifen nach Anspruch 1, wobei der 0°C tanö größer als 0,45 ist.

**3.** Luftreifen nach Anspruch 2, wobei der 0°C tanö größer als 0,60 ist.

**4.** Luftreifen nach einem der Ansprüche 1 bis 3, wobei das Flächenverhältnis Sr (%) des vulkanisierten Kautschukpulvers im Querschnitt der äußersten Schicht des Laufflächenabschnitts größer als 10% und kleiner als 40% ist.

**5.** Luftreifen nach Anspruch 4, wobei das Flächenverhältnis Sr (%) des vulkanisierten Kautschukpulvers im Querschnitt der äußersten Schicht des Laufflächenabschnitts größer als 15% und kleiner als 30% ist.

**6.** Luftreifen nach einem der Ansprüche 1 bis 5, wobei das Verhältnis (Sr/G) des Flächenverhältnisses Sr (%) des vulkanisierten Kautschukpulvers zur Dicke G (mm) am Kronenabschnitt der äußersten Schicht des Laufflächenabschnitts nicht kleiner als 0,5 ist.

**7.** Luftreifen nach Anspruch 6, wobei das Verhältnis (Sr/G) des Flächenverhältnisses Sr (%) des vulkanisierten Kautschukpulvers zur Dicke G (mm) am Kronenabschnitt der äußersten Schicht des Laufflächenabschnitts nicht kleiner als 0,8 ist.

**8.** Luftreifen nach einem der Ansprüche 1 bis 7, wobei sowohl die Gummimischung als auch das vulkanisierte Kautschukpulver Silica enthalten.

**9.** Luftreifen nach Anspruch 8, wobei der Massenprozentsatz des in der Gummimischung enthaltenen Silica höher ist als derjenige des im vulkanisierten Kautschukpulver enthaltenen Silica.

**10.** Luftreifen nach einem der Ansprüche 1 bis 9, wobei

der Laufflächenabschnitt aus zwei oder mehr Gummischichten mit unterschiedlichen Mischungsformeln zusammengesetzt ist und
die Gummimischung für eine Deckgummischicht verwendet wird, die die äußerste Schicht ist.

**11.** Luftreifen nach Anspruch 10, wobei die Gummischicht(en), die nicht die Deckgummischicht ist/sind, das vulkanisierte Kautschukpulver enthält/enthalten.

**12.** Luftreifen nach Anspruch 11, wobei

ein Flächenverhältnis Sout (%) des vulkanisierten Kautschukpulvers in der Deckgummischicht, die die äußerste Schicht des Laufflächenabschnitts ist, höher ist als ein Flächenverhältnis Sin (%) des vulkanisierten Kautschukpulvers in einer Basisgummischicht, die eine innerste Schicht des Laufflächenabschnitts ist, und
das Flächenverhältnis Sin (%) des vulkanisierten Kautschukpulvers in der Basisgummischicht größer als 1% ist.

**13.** Luftreifen nach einem der Ansprüche 1 bis 12, wobei das vulkanisierte Kautschukpulver vulkanisiertes Kautschukpulver mit einer Partikelgröße von feiner als 30 Mesh ist, die durch ein in JIS Z8801-1 spezifiziertes Prüfsieb erhalten wird.

**14.** Luftreifen nach einem der Ansprüche 1 bis 13, wobei der Luftreifen ein Luftreifen ist, der an einem motorgetriebenen Automobil montiert ist.

## Revendications

**1.** Pneumatique comprenant une section de bande de roulement, dans lequel une couche la plus externe de la section de bande de roulement est formée en utilisant une composition de caoutchouc, qui contient une poudre de caoutchouc vulcanisée et a une tangente de perte (0 °C tanδ) de plus de 0,30 telle que mesurée sous les conditions de 0 °C, une fréquence de 10 Hz, une contrainte initiale de 5 % et un taux de contrainte dynamique de 1 % avec le mode de déformation : la tension, de telle manière qu'une épaisseur G (mm) à une partie de couronne de la couche la plus externe de la section de bande de roulement est plus grande que 5 mm,

un rapport de surface Sr (%) de la poudre de caoutchouc vulcanisée dans une section transversale de la couche la plus externe de la section de bande de roulement est de pas moins de 5 % et de pas plus de 50 % et
un rapport (Sr/G) du rapport de surface Sr (%) de la poudre de caoutchouc vulcanisée à l'épaisseur G (mm) à la partie de couronne de la couche la plus externe de la section de bande de roulement est de plus de 0,3.

**2.** Pneumatique selon la revendication 1, dans lequel la 0 °C tanδ est plus grande que 0,45.

**3.** Pneumatique selon la revendication 2, dans lequel la 0 °C tanδ est plus grande que 0,60.

**4.** Pneumatique selon l'une quelconque des revendications 1 à 3, dans lequel le rapport de surface Sr (%) de la poudre de caoutchouc vulcanisée dans la section transversale de la couche la plus externe de la section de bande de roulement est de plus de 10 % et de moins de 40 %.

**5.** Pneumatique selon la revendication 4, dans lequel le rapport de surface Sr (%) de la poudre de caoutchouc vulcanisée dans la section transversale de la couche la plus externe de la section de bande de roulement est de plus de 15 % et de moins de 30 %.

**6.** Pneumatique selon l'une quelconque des revendications 1 à 5, dans lequel le rapport (Sr/G) du rapport de surface Sr (%) de la poudre de caoutchouc vulcanisée à l'épaisseur G (mm) à la partie de couronne de la couche la plus externe de la section de bande de roulement est de pas moins de 0,5.

**7.** Pneumatique selon la revendication 6, dans lequel le rapport (Sr/G) du rapport de surface Sr (%) de la poudre de caoutchouc vulcanisée à l'épaisseur G (mm) à la partie de couronne de la couche la plus externe de la section de bande de roulement est de pas moins de 0,8.

**8.** Pneumatique selon l'une quelconque des revendications 1 à 7, dans lequel les deux composition de caoutchouc et poudre de caoutchouc vulcanisée contiennent de la silice.

**9.** Pneumatique selon la revendication 8, dans lequel un pourcentage en masse de la silice contenue dans la composition de caoutchouc est supérieur à celui de la silice contenue dans la poudre de caoutchouc vulcanisée.

**10.** Pneumatique selon l'une quelconque des revendications 1 à 9, dans lequel la section de bande de roulement est composée de deux ou plus de deux couches de caoutchouc ayant différentes formules de mélange et la composition de caoutchouc est utilisée pour une couche de caoutchouc de coiffe qui est la couche la plus externe.

**11.** Pneumatique selon la revendication 10, dans lequel la(les) couche(s) de caoutchouc différente(s) de la couche de caoutchouc de coiffe contiennent la poudre de caoutchouc vulcanisée.

**12.** Pneumatique selon la revendication 11, dans lequel

un rapport de surface Sout (%) de la poudre de caoutchouc vulcanisée dans la couche de caoutchouc de coiffe qui est la couche la plus externe de la section de bande de roulement est supérieur à un rapport de surface Sin (%) de la poudre de caoutchouc vulcanisée dans une couche de caoutchouc de base qui est une couche la plus interne de la section de bande de roulement et
le rapport de surface Sin (%) de la poudre de caoutchouc vulcanisée dans la couche de caoutchouc de base est de plus de 1 %.

**13.** Pneumatique selon l'une quelconque des revendications 1 à 12, dans lequel la poudre de caoutchouc vulcanisée est une poudre de caoutchouc vulcanisée ayant une taille de particule plus fine que 30 passages de maille obtenue

par un tamis de test spécifié dans la norme JIS Z8801-1.

**14.** Pneumatique selon l'une quelconque des revendications 1 à 13, dans lequel le pneumatique est un pneumatique qui est monté sur une automobile motorisé.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017074845 A
- JP 2018199455 A
- JP 2019111838 A
- JP 2020082861 A
- US 4414370 A
- JP 59006207 A
- JP H558005 B
- JP H1313522 A
- US 5010166 A